# EUROPÄISCHE PATENTANMELDUNG

(11) **EP 3 435 180 A1**
(43) Veröffentlichungstag der Anmeldung: **30.01.2019**
(21) Anmeldenummer: 17183729.7
(22) Anmeldetag: 28.07.2017
(51) Int. Cl.: G05B 19/042, G05B 19/05, G05B 19/418, H04L 12/24

(54) **VERFAHREN ZUM BETRIEB EINES MEHRERE KOMMUNIKATIONSGERÄTE UMFASSENDEN KOMMUNIKATIONSNETZES EINES INDUSTRIELLEN AUTOMATISIERUNGSSYSTEMS UND STEUERUNGSEINHEIT**

(71) Anmelder: Siemens Aktiengesellschaft, 80333 München (DE)
(72) Erfinder: Sakic, Ermin, 81379 München (DE); Zirkler, Andreas, 81735 München (DE)

(57) **Zusammenfassung**

Zum Betrieb eines mehrere Kommunikationsgeräte umfassenden Kommunikationsnetzes eines industriellen Automatisierungssystems steuern mehrere zueinander redundante Steuerungseinheiten (101-103; 101-102, 103-104) Funktionen mehrerer zugeordneter Kommunikationsgeräte (201-203). Die Kommunikationsgeräte (201-203) übermitteln Messwerte und/oder Ereignismeldungen (21-23) als Eingangsgrößen an alle zugeordneten redundanten Steuerungseinheiten (101-103; 101-102, 103-104). Durch die zueinander redundanten Steuerungseinheiten (101-103; 101-102, 103-104) erzeugte Ausgangsgrößen (11-13; 11-12) werden auf Abweichungen zueinander überprüft. Bei Abweichungen erfolgt ein Umschalten auf Reserve-Steuerungseinheiten (103-104) oder ein Deaktivieren von Steuerungseinheiten (102) mit gegenüber einer Mehrheit von zueinander redundanten Steuerungseinheiten (101, 103) abweichenden Ausgangsgrößen (12).

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Software Defined Networking (SDN) zielt auf eine Virtualisierung von Kommunikationsnetzfunktionen ab, indem Kommunikationsgeräte wie Router oder Switche funktionell in Control Plane und Data Plane zugeordnete Komponenten unterteilt werden. Die Data Plane umfasst Funktionen bzw. Komponenten zur Weiterleitung von Datenpaketen bzw. -rahmen. Die Control Plane umfasst hingegen Management-Funktionen zur Steuerung der Weiterleitung bzw. der Komponenten der Data Plane. Mit OpenFlow ist beispielsweise ein Standard für Software-implementierte Control Planes definiert. Eine Abstraktion von Hardware als virtuelle Services ermöglicht einen Verzicht auf eine manuelle Konfiguration der Hardware, insbesondere indem eine programmierbare, zentrale Steuerung von Netzverkehr geschaffen wird. OpenFlow unterstützt eine Partitionierung von System-Ressourcen in Network Slices, durch die unabhängig von anderen bestehenden Network Slices eine Bereitstellung definierter System-Ressourcen gewährleistet wird.

Aus US 2013/268686 A1 ist ein Verfahren zum Senden einer Anforderung eines Verbindungsaufbaus bekannt, bei dem ein OpenFlow-Switch eine Nachricht mit einer Parameteranforderung an einen Konfigurationsserver sendet, um Verbindungsparameter von einem OpenFlow-Controller zu erhalten. Auf die Nachricht mit der Parameteranforderung empfängt der OpenFlow-Switch eine IP-Adresse und einen Satz von OpenFlow-Verbindungsparametern vom Konfigurationsserver, wobei der Satz von OpenFlow-Verbindungsparametern zumindest Verbindungsparameter eines ersten OpenFlow-Controllers umfasst. Der OpenFlow-Switch sendet entsprechend der IP-Adresse und dem Satz von OpenFlow-Verbindungsparametern des ersten OpenFlow-Controllers eine Nachricht mit einer Anforderung eines Verbindungsaufbaus an den ersten OpenFlow-Controller. Auf diese Weise kann ein automatischer Verbindungsaufbau zwischen einem OpenFlow-Switch und einem OpenFlow-Controller realisiert werden.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

In EP 2 795 842 B1 ist eine Steuerungseinheit zur Bereitstellung von Kommunikationsdiensten innerhalb eines physikalischen Kommunikationsnetzes beschrieben. Diese Kommunikationsdienste werden durch mehrere auf Kommunikationsgeräten ablaufende Anwendungen genutzt, für die jeweils Anforderungen an die Kommunikationsdienste spezifiziert sind. Durch die Steuerungseinheit wird ein Kommunikationsnetzmodell erzeugt, das eine Topologie des physikalischen Kommunikationsnetzes wiedergibt und für jedes Kommunikationsgerät ein Netzknotenmodell umfasst. Das Netzknotenmodell beschreibt Funktionen und Ressourcen des jeweiligen Kommunikationsgeräts. Außerdem berechnet die Steuerungseinheit für jede auf den Kommunikationsgeräten ablaufende Anwendung ein virtuelles Kommunikationsnetz, indem die Anforderungen der jeweiligen Anwendung an die Kommunikationsdienste auf das Kommunikationsnetzmodell abgebildet werden. Die berechneten virtuellen Kommunikationsnetze umfassen jeweils zumindest 2 durch ein Netzknotenmodell beschriebene Netzknoten und eine Partition bzw. Network Slice ausgewählter Kommunikationsnetzressourcen, die durch die Kommunikationsgeräte bereitgestellt werden.

Der vorliegenden Erfindung liegt die Aufgabe zugrunde, ein Verfahren zum effizienten und zuverlässigen Betrieb eines zahlreiche Kommunikationsgeräte umfassenden Kommunikationsnetzes für ein industrielles Automatisierungssystem anzugeben, das eine ausfall- und manipulationssichere Steuerung von Kommunikationsgerätefunktionen durch übergeordnete Steuerungseinheiten ermöglicht, sowie eine Steuerungseinheit zur Durchführung des Verfahrens zu schaffen.

Diese Aufgabe wird erfindungsgemäß durch ein Verfahren mit den in Anspruch 1 genannten Merkmalen und durch eine Steuerungseinheit mit den in Anspruch 18 angegebenen Merkmalen gelöst. Vorteilhafte Weiterbildungen der vorliegenden Erfindung sind in den abhängigen Patentansprüchen angegeben.

Erfindungsgemäß steuern mehrere zueinander redundante Steuerungseinheiten Funktionen mehrerer zugeordneter Kommunikationsgeräte. Die zueinander redundanten Steuerungseinheiten umfassen identisch ausgestaltete und eingerichtete Zustandsautomaten, die in fehlerfreiem Zustand bei identischen Eingangsgrößen identische Ausgangsgrößen erzeugen. Vorzugsweise sind die Zustandsautomaten der zueinander redundanten Steuerungseinheiten replizierte Zustandsmaschinen (replicated state machines). Die Steuerungseinheiten ermitteln für Benutzer-seitige Kommunikationsdienst-Anforderungen jeweils einen Pfad zwischen einem ersten Kommunikationsgerät an einem ersten Endknoten und einem zweiten Kommunikationsgerät an einem zweiten Endknoten über dritte Kommunikationsgeräte und überprüfen, ob entlang der ermittelten Pfade während einer geplanten Nutzungsdauer jeweils erforderliche Systemressourcen verfügbar sind. Bei einem positiven Überprüfungsergebnis reservieren die Steuerungseinheiten für die Kommunikationsdienst-Anforderungen jeweils erforderliche Systemressourcen und steuern Routing- oder Switching-Funktionen der dritten Kommunikationsgeräte entsprechend den ermittelten Pfaden.

Die Kommunikationsgeräte übermitteln erfindungsgemäß Messwerte bzw. Ereignismeldungen als Eingangsgrößen an alle zugeordneten redundanten Steuerungseinheiten. Die durch die zueinander redundanten Steuerungseinheiten erzeugten Ausgangsgrößen werden auf Abweichungen zueinander überprüft, beispielsweise durch die zueinander redundanten Steuerungseinheiten bzw. durch die zugeordneten Kommunikationsgeräte. Bei Abweichungen erfolgt ein Umschalten auf Reserve-Steuerungseinheiten oder ein Deaktivieren von Steuerungseinheiten mit gegenüber einer Mehrheit von zueinander redundanten Steuerungseinheiten abweichenden Ausgangsgrößen. Auf diese Weise ist eine Steuerung der Funktionen der Kommunikationsgeräte durch die Steuerungseinheiten gegenüber korrumpierten Eingangs- und Ausgangsgrößen der Steuerungseinheiten sowie gegenüber Ausfällen von Steuerungseinheiten gesichtert.

Die vorliegende Erfindung wird nachfolgend an einem Ausführungsbeispiel anhand der Zeichnung näher erläutert. Es zeigt
- Figur 1: ein mehrere Kommunikationsgeräte und drei zueinander redundante Steuerungseinheiten umfassendes Kommunikationsnetz eines industriellen Automatisierungssystems,
- Figur 2: ein mehrere Kommunikationsgeräte und zwei Paare zueinander redundanter Steuerungseinheiten umfassendes Kommunikationsnetz eines industriellen Automatisierungssystems.

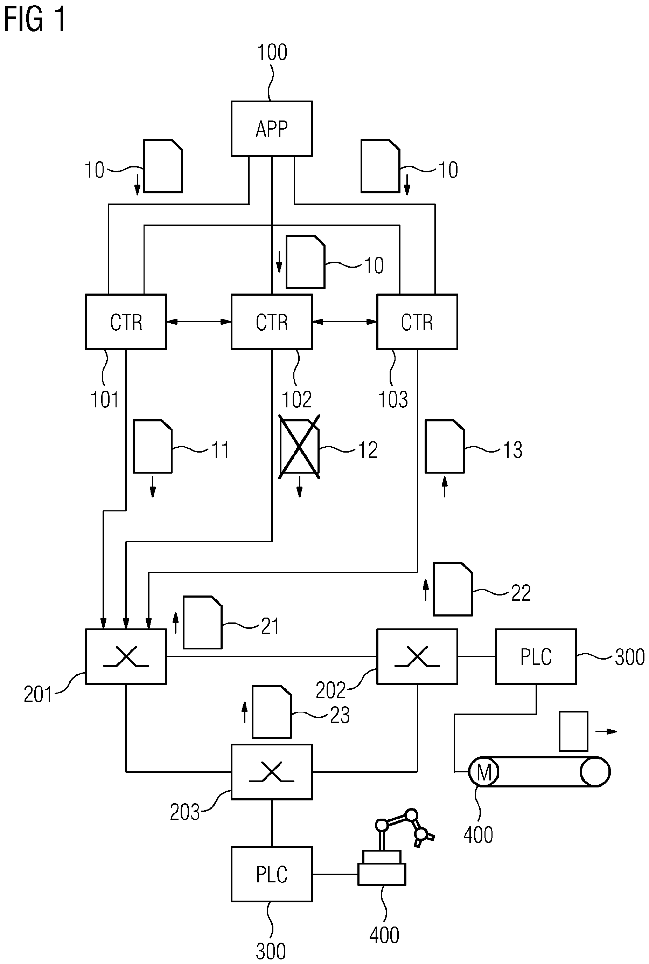

Das in Figur 1 dargestellte Kommunikationsnetz eines industriellen Automatisierungssystems umfasst mehrere Kommunikationsgeräte 201-203 und drei zueinander redundante Steuerungseinheiten 101-103, die den Kommunikationsgeräten 201-203 zugeordnet sind. Die Steuerungseinheiten 101-103 sind dafür ausgestaltet und eingerichtet, gemeinsam mit den jeweils anderen Steuerungseinheiten Funktionen der zugeordneten Kommunikationsgeräte 201-203 zu steuern. Dabei umfassen die zueinander redundanten Steuerungseinheiten 101-103 identisch ausgestaltete und eingerichtete Zustandsautomaten, die in fehlerfreiem Zustand bei identischen Eingangsgrößen identische Ausgangsgrößen 11-13 für zumindest ein ausgewähltes Kommunikationsgerät 201 erzeugen. Vorzugsweise sind die Zustandsautomaten der zueinander redundanten Steuerungseinheiten 101-103 replizierte Zustandsmaschinen. Vorzugsweise authentisieren sich die zueinander redundanten Steuerungseinheiten 101-103 gegenüber den zugeordneten Kommunikationsgeräten 201-203 und erhalten erst nach erfolgreicher Authentifizierung Steuerungszugriff auf die zugeordneten Kommunikationsgeräte 201-203.

Die Kommunikationsgeräte 201-203 können beispielsweise Switche, Router oder Firewalls sein und zum Anschluss von speicherprogrammierbaren Steuerungen 300 oder Ein-/Ausgabeeinheiten des industriellen Automatisierungssystems dienen. Speicherprogrammierbare Steuerungen 300 umfassen typischerweise jeweils ein Kommunikationsmodul, eine Zentraleinheit sowie zumindest eine Eingabe/Ausgabe-Einheit (I/O-Modul) und stellen somit ebenfalls Kommunikationsgeräte dar. Eingabe/Ausgabe-Einheiten können grundsätzlich auch als dezentrale Peripheriemodule ausgestaltet sein, die entfernt von einer speicherprogrammierbaren Steuerung angeordnet sind.

Über das Kommunikationsmodul ist eine speicherprogrammierbare Steuerung 300 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 300 und einer durch die speicherprogrammierbare Steuerung 300 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 300 sind im vorliegenden Ausführungsbeispiel über ein Rückwandbus-System miteinander verbunden.

Die Kommunikationsgeräte 201-203 sind im vorliegenden Ausführungsbeispiel einem Software Defined Network (SDN) zugeordnet, das eine als Control Plane bezeichnete Kommunikationssteuerungsebene und eine als Data Plane bezeichnete Datenübermittlungsebene umfasst. Die Steuerungseinheiten 101-103 als SDN-Controller sind der Control Plane zugeordnet, während die Kommunikationsgeräte 201-203 der Data Plane zugeordnet sind. Durch die Steuerungseinheiten 101-103 werden beispielsweise Flow-Tabellen für Switche oder Router vorgegeben, aus denen Routing-Regeln bzw. Forwarding-Regeln für die den Steuerungseinheiten 101-103 zugeordneten Kommunikationsgeräte 201-203 abgeleitet werden.

Die Steuerungseinheiten 101-103 ermitteln insbesondere für Benutzer-seitige Kommunikationsdienst-Anforderungen 10 jeweils einen Pfad zwischen einem ersten Kommunikationsgerät 202 an einem ersten Endknoten und einem zweiten Kommunikationsgerät 203 an einem zweiten Endknoten über zumindest ein drittes Kommunikationsgerät 201. Dabei stellen der erste Endknoten und der zweite Endknoten Dienstzugangspunkte für die Benutzer-seitigen Kommunikationsdienst-Anforderungen 10 dar. Die Benutzer-seitigen Kommunikationsdienst-Anforderungen 10 werden beispielsweise von einer Anwendung oder Anwendungssteuerungseinheit 100 an die zueinander redundanten Steuerungseinheiten 101-103 übermittelt. Die Steuerungseinheiten 101-103 überprüfen, ob entlang der ermittelten Pfade während einer geplanten Nutzungsdauer jeweils erforderliche Systemressourcen verfügbar sind. Bei einem positiven Überprüfungsergebnis reservieren die Steuerungseinheiten 101-103 für die Kommunikationsdienst-Anforderungen 10 jeweils erforderliche Systemressourcen und steuern über ihre Ausgangsgrößen 11-13 Routing- oder Switching-Funktionen des zumindest einen dritten Kommunikationsgeräts 201 entsprechend den ermittelten Pfaden. Aus Gründen einer einfachen Darstellung umfasst das Kommunikationsnetz nur drei zu steuernde Kommunikationsgeräte 201-203. Das vorliegende Ausführungsbeispiel ist jedoch ohne weiteres auf komplexere, vermaschte Netztopologien mit einer Vielzahl dritter Kommunikationsgeräte übertragbar.

Erfindungsgemäß übermitteln die Kommunikationsgeräte 201-203 Messwerte bzw. Ereignismeldungen 21-23 als Eingangsgrößen an alle zugeordneten redundanten Steuerungseinheiten 101-103. Die durch die zueinander redundanten Steuerungseinheiten 101-103 erzeugten Ausgangsgrößen 11-13 werden auf Abweichungen zueinander überprüft. Bei Abweichungen erfolgt bei dem in Figur 1 dargestellten Kommunikationsnetz ein Deaktivieren von Steuerungseinheiten mit gegenüber einer Mehrheit von zueinander redundanten Steuerungseinheiten abweichenden Ausgangsgrößen erfolgt. Im vorliegenden Ausführungsbeispiel weicht beispielsweise die Ausgangsgröße 12 der Steuerungseinheit 102 von den identischen Ausgangsgrößen 11 und 13 der Steuerungseinheiten 101 und 103 ab. Daher wird in diesem Fall die Steuerungseinheit 102 deaktiviert. Ein Deaktivieren kann beispielsweise durch Ignorieren der Ausgangsgröße 12 im ausgewählten Kommunikationsgerät 201 bzw. durch Markieren eines entsprechenden Steuerungspfades von der Steuerungseinheit 102 zum ausgewählten Kommunikationsgerät 201 als unzuverlässig erfolgen. Vorzugsweise wird für einen als unzuverlässig markierten Steuerungspfad ein Ersatzpfad berechnet, so dass die Steuerungseinheit 102 ggf. wieder aktiviert werden kann. Dies setzt jedoch voraus, dass die Steuerungseinheit 102 grundsätzlich korrekte Ausgangsgrößen erzeugt. Dies kann beispielsweise durch die beiden anderen Steuerungseinheiten 101 und 103 überprüft werden.

Die durch die zueinander redundanten Steuerungseinheiten 101-103 erzeugten Ausgangsgrößen 11-13 können entweder durch die zugeordneten Kommunikationsgeräte 201-203, insbesondere durch das ausgewählte Kommunikationsgerät 201, oder selbständig durch die Steuerungseinheiten 201-203 auf Abweichungen überprüft werden. In entsprechender Weise kann das Deaktivieren der Steuerungseinheit 102 mit gegenüber der Mehrheit der zueinander redundanten Steuerungseinheiten - hier Steuerungseinheit 101 und Steuerungseinheit 103 - abweichender Ausgangsgröße 12 entweder durch die zugeordneten Kommunikationsgeräte oder selbständig durch die Steuerungseinheiten erfolgen.

Vorzugsweise gleichen die zueinander redundanten Steuerungseinheiten 101-103 untereinander von den zugeordneten Kommunikationsgeräten 201-203 empfangene Eingangsgrößen ab. Analog zum Vorgehen bei den Ausgangsgrößen werden Steuerungseinheiten mit gegenüber einer Mehrheit der zueinander redundanten Steuerungseinheiten abweichenden Eingangsgrößen vorteilhafterweise deaktiviert. Auch hier kann ein Deaktivieren durch Markieren eines entsprechenden Pfades vom jeweiligen Kommunikationsgerät zur betroffenen Steuerungseinheit als unzuverlässig erfolgen. Falls möglich, wird für einen als unzuverlässig markierten Pfad ein Ersatzpfad berechnet, insbesondere wenn kein Fehler in der betroffenen Steuerungseinheit vorliegt. Die Steuerungseinheiten mit gegenüber der Mehrheit von zueinander redundanten Steuerungseinheiten abweichenden Eingangsgrößen deaktivieren sich vorteilhafterweise selbständig, beispielsweise indem eine Erzeugung von Ausgangsgrößen eingestellt oder ausgesetzt wird.

Das Kommunikationsnetz entsprechend Figur 1 kann beispielsweise in mehrere Partitionen unterteilt werden, die vorgebbare Anteile an Systemressourcen der Kommunikationsgeräte 201-203 umfassen, die der jeweiligen Partition zugeordnet sind. In diesem Fall ermitteln die Steuerungseinheiten 101-103 für Benutzer-seitige Kommunikationsdienst-Anforderungen innerhalb der dem jeweiligen Benutzer zugeordneten Partition jeweils einen Pfad zwischen einem ersten Kommunikationsgerät an einem ersten Endknoten und einem zweiten Kommunikationsgerät an einem zweiten Endknoten über dritte Kommunikationsgeräte. Dementsprechend überprüfen die Steuerungseinheiten 101-103, ob entlang der ermittelten Pfade innerhalb der dem jeweiligen Benutzer zugeordneten Partition während einer geplanten Nutzungsdauer jeweils erforderliche Systemressourcen verfügbar sind. Die Partitionen sind insbesondere Network Slices, die mittels eines Engineering-Systems manuell durch einen Systemadministrator oder automatisiert festgelegt werden. Für jede Steuerungseinheit 101-103 ist vorzugsweise jeweils eine separate Ressourcensicht mit den Anteilen an Systemressourcen vorgesehen.

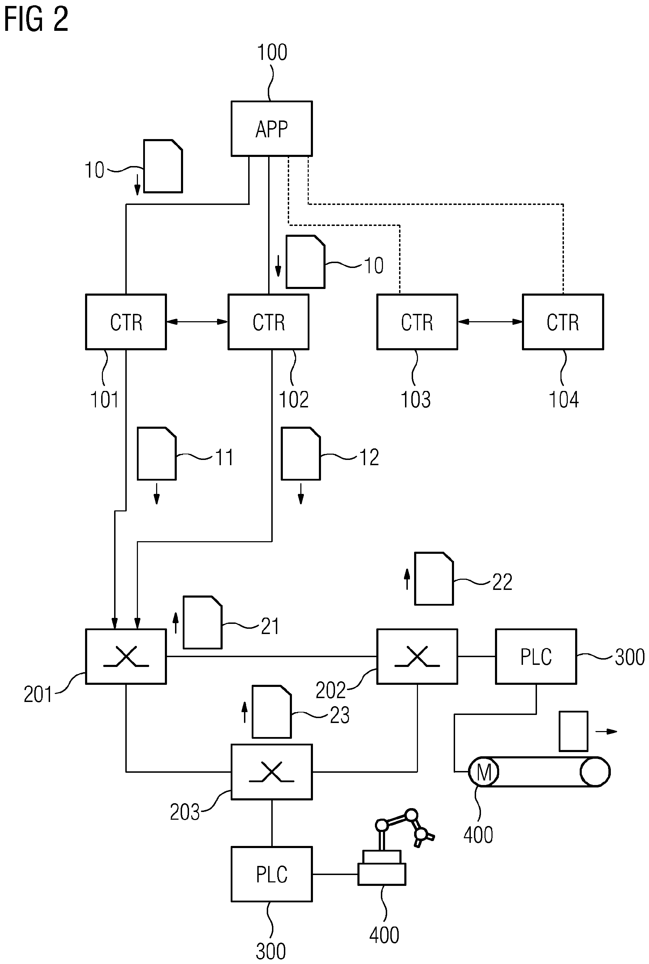

Beim Kommunikationsnetz entsprechend Figur 2 sind im Unterschied zum in Figur 1 dargestellten Kommunikationsnetz zwei Paare zueinander redundanter Steuerungseinheiten 101-102, 103-104 vorgesehen. Dabei wird zunächst ein Paar zueinander redundanter Haupt-Steuerungseinheiten 101-102 aktiviert. Bei Abweichungen der durch die zueinander redundanten Haupt-Steuerungseinheiten 101-102 erzeugten Ausgangsgrößen erfolgt ein Umschalten vom Paar zueinander redundanter Haupt-Steuerungseinheiten 101-102 auf ein Paar zueinander redundanter Reserve-Steuerungseinheiten 103-104. Vorzugsweise überwachen sich die zueinander redundanten Haupt-Steuerungseinheiten 101-102 gegenseitig auf unterschiedliche Eingangs- bzw. Ausgangsgrößen und deaktivieren sich bei festgestellten Abweichungen selbständig. Darüber hinaus schalten die zugeordneten Kommunikationsgeräte 201-203 vorteilhafterweise bei abweichenden Ausgangsgrößen 11-12 der zueinander redundanten Haupt-Steuerungseinheiten 101-102 bzw. bei einer durch die zueinander redundanten Haupt-Steuerungseinheiten 101-102 signalisierten Selbst-Deaktivierung von den Haupt-Steuerungseinheiten 101-102 auf die Reserve-Steuerungseinheiten 103-104 um. Des weiteren werden den Kommunikationsgeräten 201-203 jeweils zugeordnete Paare von zueinander redundanten Haupt-Steuerungseinheiten 101-102 entsprechend dem vorliegenden Ausführungsbeispiel in eine Liste ("History") eingetragen. In die Liste eingetragene ehemalige Haupt-Steuerungseinheiten werden vorzugsweise von einer Verwendung als Reserve-Steuerungseinheiten für die jeweiligen Kommunikationsgeräte ausgeschlossen.

Die Ausgangsgrößen 11-12 der zueinander redundanten Haupt-Steuerungseinheiten 101-102 werden zur paarweise gegenseitigen Überwachung vorteilhafterweise über jeweils zumindest 2 disjunkte Pfade zur jeweils anderen Haupt-Steuerungseinheit übermittelt. Die Haupt-Steuerungseinheit 101 übermittelt beispielsweise ihre Ausgangsgröße 11 über Pfad A und über Pfad B, während die Haupt-Steuerungseinheit 102 ihre Ausgangsgröße 12 über Pfad C und über Pfad D übermittelt. Die Pfade A-D sind dabei disjunkt.

Wenn beispielsweise die über Pfad A übermittelte Ausgangsgröße 11 mit der über Pfad B übermittelten Ausgangsgröße 11 sowie mit der über Pfad C übermittelten Ausgangsgröße 12 übereinstimmt und lediglich die über Pfad D übermittelte Ausgangsgröße 12 hiervon abweicht, kann Pfad D durch die Haupt-steuerungseinheit 101 als fehlerbehafteter Pfad erkannt werden. In diesem Fall würde noch keine Selbst-Deaktivierung der Haupt-Steuerungseinheiten 101-102 eingeleitet, da sie grundsätzlich korrekte und übereinstimmende Ausgangsgrößen 11-12 erzeugen. Allgemein bleiben die zueinander redundanten Haupt-Steuerungseinheiten 101-102 vorzugsweise aktiviert, solange sie über zumindest einen Pfad mit den eigenen Ausgangsgrößen übereinstimmende Ausgangsgrößen der jeweils anderen Haupt-Steuerungseinheit empfangen.

Darüber hinaus werden die Ausgangsgrößen 11-12 der zueinander redundanten Haupt-Steuerungseinheiten 101-102 vorzugsweise über jeweils zumindest 2 disjunkte Pfade je Haupt-Steuerungseinheit zu den zugeordneten Kommunikationsgeräten 201-203 übermittelt. Die Haupt-Steuerungseinheit 101 übermittelt beispielsweise ihre Ausgangsgröße 11 über Pfad E und über Pfad F an das ausgewählte Kommunikationsgerät 201, während die Haupt-Steuerungseinheit 102 ihre Ausgangsgröße 12 über Pfad G und über Pfad H an das ausgewählte Kommunikationsgerät 201 übermittelt. Die Pfade E-H sind dabei disjunkt.

Wenn beispielsweise die über Pfad E übermittelte Ausgangsgröße 11 mit der über Pfad H übermittelten Ausgangsgröße 12 übereinstimmt und lediglich die über Pfad F übermittelte Ausgangsgröße 11 sowie über Pfad G übermittelte Ausgangsgröße 12 hiervon abweichen, können die Pfade F und G durch das ausgewählte Kommunikationsgerät 201 als fehlerbehaftete Pfade erkannt werden. Dies gilt allerdings nur dann, wenn sich die über Pfad F übermittelte Ausgangsgröße 11 und die über Pfad G übermittelte Ausgangsgröße 12 voneinander unterscheiden. Nur in diesem Fall kann das ausgewählte Kommunikationsgerät 201 die über Pfad E übermittelte Ausgangsgröße 11 sowie die über Pfad H übermittelte Ausgangsgröße 12 als korrekte Ausgangsgrößen der Haupt-Steuerungseinheiten 101-102 behandeln. Allgemein können die zueinander redundanten Haupt-Steuerungseinheiten 101-102 für das ausgewählte Kommunikationsgerät 201 aktiviert bleiben, solange das ausgewählte Kommunikationsgerät 201 über zumindest 2 Pfade übereinstimmende Ausgangsgrößen beider Haupt-Steuerungseinheiten und über die übrigen Pfade jeweils voneinander abweichende Ausgangsgrößen empfängt. Dies würde jedoch beispielsweise nicht zutreffen, wenn die über Pfad F übermittelte Ausgangsgröße 11 und die über Pfad G übermittelte Ausgangsgröße 12 in obigem Beispiel übereinstimmen. Unterscheiden, also bei folgender Konstellation:
*Ausgangsgröße 11 (Pfad E)= Ausgangsgröße 12 (Pfad H)="alpha" UND*
*Ausgangsgröße 11 (Pfad F)= Ausgangsgröße 12 (Pfad G)="beta"*

In diesem Fall stößt das ausgewählte Kommunikationsgerät 201 ein Umschalten von den Haupt-Steuerungseinheiten 101-102 auf die Reserve-Steuerungseinheiten 103-104 an, wobei die Haupt-Steuerungseinheiten 101-102 deaktiviert werden.

## Patentansprüche

1. Verfahren zum Betrieb eines mehrere Kommunikationsgeräte umfassenden Kommunikationsnetzes eines industriellen Automatisierungssystems, bei dem
- mehrere zueinander redundante Steuerungseinheiten (101-103; 101-102, 103-104) Funktionen mehrerer zugeordneter Kommunikationsgeräte (201-203) steuern, wobei die zueinander redundanten Steuerungseinheiten identisch ausgestaltete und eingerichtete Zustandsautomaten umfassen, die in fehlerfreiem Zustand bei identischen Eingangsgrößen identische Ausgangsgrößen (11-13; 11-12) erzeugen,
- die Steuerungseinheiten (101-103; 101-102, 103-104) für Benutzer-seitige Kommunikationsdienst-Anforderungen (10) jeweils einen Pfad zwischen einem ersten Kommunikationsgerät an einem ersten Endknoten und einem zweiten Kommunikationsgerät an einem zweiten Endknoten über dritte Kommunikationsgeräte ermitteln,
- die Steuerungseinheiten (101-103; 101-102, 103-104) überprüfen, ob entlang der ermittelten Pfade während einer geplanten Nutzungsdauer jeweils erforderliche Systemressourcen verfügbar sind,
- die Steuerungseinheiten (101-103; 101-102, 103-104) für die Kommunikationsdienst-Anforderungen (10) jeweils bei einem positiven Überprüfungsergebnis erforderliche Systemressourcen reservieren und Routing- oder Switching-Funktionen der dritten Kommunikationsgeräte entsprechend den ermittelten Pfaden steuern,
- die Kommunikationsgeräte (201-203) Messwerte und/oder Ereignismeldungen (21-23) als Eingangsgrößen an alle zugeordneten redundanten Steuerungseinheiten (101-103; 101-102, 103-104) übermitteln,
- die durch die zueinander redundanten Steuerungseinheiten (101-103; 101-102, 103-104) erzeugten Ausgangsgrößen (11-13; 11-12) auf Abweichungen zueinander überprüft werden,
- bei Abweichungen ein Umschalten auf Reserve-Steuerungseinheiten (103-104) oder ein Deaktivieren von Steuerungseinheiten (102) mit gegenüber einer Mehrheit von zueinander redundanten Steuerungseinheiten (101, 103) abweichenden Ausgangsgrößen (12) erfolgt.

2. Verfahren nach Anspruch 1,
bei dem die Zustandsautomaten der zueinander redundanten Steuerungseinheiten (101-103; 101-102, 103-104) replizierte Zustandsmaschinen sind.

3. Verfahren nach einem der Ansprüche 1 oder 2,
bei dem die durch die zueinander redundanten Steuerungseinheiten (101-103; 101-102, 103-104) erzeugten Ausgangsgrößen (11-13; 11-12) durch die zugeordneten Kommunikationsgeräte (201-203) oder selbständig durch die Steuerungseinheiten auf Abweichungen überprüft werden.

4. Verfahren nach einem der Ansprüche 1 bis 3,
bei dem das Deaktivieren von Steuerungseinheiten mit gegenüber der Mehrheit von zueinander redundanten Steuerungseinheiten abweichenden Ausgangsgrößen durch die zugeordneten Kommunikationsgeräte oder selbständig durch die Steuerungseinheiten erfolgt.

5. Verfahren nach Anspruch 4,
bei dem das Deaktivieren von Steuerungseinheiten mit gegenüber der Mehrheit von zueinander redundanten Steuerungseinheiten abweichenden Ausgangsgrößen durch Ignorieren der abweichenden Ausgangsgrößen in den zugeordneten Kommunikationsgeräten erfolgt.

6. Verfahren nach einem der Ansprüche 1 bis 5,
bei dem die zueinander redundanten Steuerungseinheiten untereinander von zugeordneten Kommunikationsgeräten empfangene Eingangsgrößen abgleichen und bei dem Steuerungseinheiten mit gegenüber einer Mehrheit von zueinander redundanten Steuerungseinheiten abweichenden Eingangsgrößen deaktiviert werden.

7. Verfahren nach Anspruch 6,
bei dem sich die Steuerungseinheiten mit gegenüber der Mehrheit von zueinander redundanten Steuerungseinheiten abweichenden Eingangsgrößen selbständig deaktivieren.

8. Verfahren nach Anspruch 7,
bei dem sich die Steuerungseinheiten mit gegenüber der Mehrheit von zueinander redundanten Steuerungseinheiten abweichenden Eingangsgrößen selbständig deaktivieren, indem eine Erzeugung von Ausgangsgrößen eingestellt oder ausgesetzt wird.

9. Verfahren nach einem der Ansprüche 1 bis 8,
bei dem jeweils Paare zueinander redundanter Steuerungseinheiten (101-102; 103-104) vorgesehen sind, bei dem zunächst jeweils ein Paar zueinander redundanter Haupt-Steuerungseinheiten (101-102) aktiviert wird und bei dem bei Abweichungen der durch die zueinander redundanten Haupt-Steuerungseinheiten (101-102) erzeugten Ausgangsgrößen (11-12) jeweils ein Umschalten vom Paar zueinander redundanter Haupt-Steuerungseinheiten (101-102) auf ein Paar zueinander redundanter Reserve-Steuerungseinheiten (103-104) erfolgt.

10. Verfahren nach Anspruch 9,
bei dem sich die zueinander redundanten Haupt-Steuerungseinheiten (101-102) paarweise gegenseitig auf unterschiedliche Eingangs- und/oder Ausgangsgrößen überwachen und bei festgestellten Abweichungen selbständig deaktivieren.

11. Verfahren nach einem der Ansprüche 9 oder 10,
bei dem den Kommunikationsgeräten (201) jeweils zugeordnete Paare von zueinander redundanten Haupt-Steuerungseinheiten (101-102) in eine Liste eingetragen werden und bei dem in die Liste eingetragene ehemalige Haupt-Steuerungseinheiten von einer Verwendung als Reserve-Steuerungseinheiten für die jeweiligen Kommunikationsgeräte ausgeschlossen werden.

12. Verfahren nach einem der Ansprüche 9 bis 11,
bei dem die zugeordneten Kommunikationsgeräte (201-203) bei abweichenden Ausgangsgrößen (11-12) der zueinander redundanten Haupt-Steuerungseinheiten (101-102) und/oder bei einer durch die zueinander redundanten Haupt-Steuerungseinheiten signalisierten Selbst-Deaktivierung von den Haupt-Steuerungseinheiten (101-102) auf die Reserve-Steuerungseinheiten (103-104) umschalten.

13. Verfahren nach einem der Ansprüche 9 bis 12,
bei dem die Ausgangsgrößen der zueinander redundanten Haupt-Steuerungseinheiten zur paarweise gegenseitigen Überwachung über jeweils zumindest 2 disjunkte Pfade zur jeweils anderen Haupt-Steuerungseinheit übermittelt werden und bei dem die zueinander redundanten Haupt-Steuerungseinheiten aktiviert bleiben, solange sie über zumindest einen Pfad mit den eigenen Ausgangsgrößen übereinstimmende Ausgangsgrößen der jeweils anderen Haupt-Steuerungseinheit empfangen.

14. Verfahren nach einem der Ansprüche 9 bis 13,
bei dem die Ausgangsgrößen der zueinander redundanten Haupt-Steuerungseinheiten über jeweils zumindest 2 disjunkte Pfade je Haupt-Steuerungseinheit zu den zugeordneten Kommunikationsgeräten übermittelt werden und bei dem die zueinander redundanten Haupt-Steuerungseinheiten für das jeweilige zugeordnete Kommunikationsgerät aktiviert bleiben, solange das jeweilige zugeordnete Kommunikationsgerät über zumindest 2 Pfade übereinstimmende Ausgangsgrößen beider Haupt-Steuerungseinheiten und über die übrigen Pfade jeweils voneinander abweichende Ausgangsgrößen empfängt.

15. Verfahren nach einem der Ansprüche 1 bis 14,
bei dem das Kommunikationsnetz in mehrere Partitionen unterteilt wird, die vorgebbare Anteile an Systemressourcen von Kommunikationsgeräten umfassen, die der jeweiligen Partition zugeordnet sind, bei dem die Steuerungseinheiten für Benutzer-seitige Kommunikationsdienst-Anforderungen innerhalb der dem jeweiligen Benutzer zugeordneten Partition jeweils einen Pfad zwischen einem ersten Kommunikationsgerät an einem ersten Endknoten und einem zweiten Kommunikationsgerät an einem zweiten Endknoten über dritte Kommunikationsgeräte ermitteln und bei dem die Steuerungseinheiten überprüfen, ob entlang der ermittelten Pfade innerhalb der dem jeweiligen Benutzer zugeordneten Partition während einer geplanten Nutzungsdauer jeweils erforderliche Systemressourcen verfügbar sind.

16. Verfahren nach einem der Ansprüche 1 bis 15,
bei dem die Kommunikationsgeräte (201-203) einem Software Defined Network zugeordnet sind, das eine als Control Plane bezeichnete Kommunikationssteuerungsebene und eine als Data Plane bezeichnete Datenübermittlungsebene umfasst, bei dem die Steuerungseinheiten (101-103; 101-102, 103-104) der Control Plane zugeordnet sind, bei dem die Kommunikationsgeräte (201-203) der Data Plane zugeordnet sind, bei dem die dritten Kommunikationsgeräte Router und/oder Switches umfassen und bei dem durch die Steuerungseinheiten (101-103; 101-102, 103-104) Flow-Tabellen vorgebbar sind, aus denen Routing-Tabellen und/oder Forwarding-Tabellen für den Steuerungseinheiten jeweils zugeordnete dritte Kommunikationsgeräte abgeleitet werden.

17. Verfahren nach einem der Ansprüche 1 bis 16,
bei dem sich die zueinander redundanten Steuerungseinheiten (101-103; 101-102, 103-104) gegenüber den zugeordneten Kommunikationsgeräten (201-203 authentisieren und bei dem die zueinander redundanten Steuerungseinheiten erst nach erfolgreicher Authentifizierung Steuerungszugriff auf die zugeordneten Kommunikationsgeräte erhalten.

18. Steuerungseinheit zur Durchführung eines Verfahrens nach einem der Ansprüche 1 bis 17, die dafür ausgestaltet und eingerichtet ist,
- gemeinsam mit zumindest einer redundanten Steuerungseinheit (102-103; 102) Funktionen mehrerer zugeordneter Kommunikationsgeräte (201-203) zu steuern, wobei zueinander redundanten Steuerungseinheiten (101-103; 101-102, 103-104) identisch ausgestaltete und eingerichtete Zustandsautomaten umfassen, die dafür ausgestaltet und eingerichtet sind, in fehlerfreiem Zustand bei identischen Eingangsgrößen identische Ausgangsgrößen (11-13; 11-12) zu erzeugen,
- für Benutzer-seitige Kommunikationsdienst-Anforderungen (10) jeweils einen Pfad zwischen einem ersten Kommunikationsgerät an einem ersten Endknoten und einem zweiten Kommunikationsgerät an einem zweiten Endknoten über dritte Kommunikationsgeräte zu ermitteln,
- zu überprüfen, ob entlang der ermittelten Pfade während einer geplanten Nutzungsdauer jeweils erforderliche Systemressourcen verfügbar sind,
- für die Kommunikationsdienst-Anforderungen (10) jeweils bei einem positiven Überprüfungsergebnis erforderliche Systemressourcen zu reservieren und Routing- oder Switching-Funktionen der dritten Kommunikationsgeräte entsprechend den ermittelten Pfaden zu steuern,
- von zugeordneten Kommunikationsgeräten (201-203) Messwerte und/oder Ereignismeldungen (21-23) als Eingangsgrößen zu empfangen,
- die eigenen Ausgangsgrößen (11) und die Ausgangsgrößen (12-13; 12) der redundanten Steuerungseinheit (102-103; 102) auf Abweichungen zueinander zu überprüfen,
- bei Abweichungen auf Reserve-Steuerungseinheiten (103-104) umzuschalten oder Steuerungseinheiten (102) mit gegenüber einer Mehrheit von zueinander redundanten Steuerungseinheiten (101, 103) abweichenden Ausgangsgrößen (12) zu deaktivieren.
